# EUROPEAN PATENT SPECIFICATION

(11) **EP 1 371 256 B1**
(45) Date of publication and mention of the grant of the patent: **21.01.2009**
(21) Application number: 02711612.8
(22) Date of filing: 14.02.2002
(51) Int. Cl.: H04W 12/06

(54) **DIGITAL PERMISSIONS FOR POSITIONING**
DIGITALE ERLAUBNISSE ZUR POSITIONIERUNG
PERMISSIONS NUMERIQUES POUR UN POSITIONNEMENT

(30) Priority: 19.02.2001 SE 0100549
(43) Date of publication of application: 17.12.2003
(73) Proprietor: TELIASONERA AB, 106 63 Stockholm (SE)
(72) Inventor: ERIKSSON, Jonas, S-652 22 Karlstad (SE)
(74) Representative: Hopfgarten, Nils
(86) International application number: PCT/SE2002/000255
(87) International publication number: WO 2002/067621

(56) References cited:
- WO-A1-00/38467
- WO-A1-00/44188
- WO-A1-00/51391
- WO-A1-98/52379

## Description

### Field of the invention

The present invention relates to a system and a procedure for secure management of position information in a wireless communication network, and particularly such a system and procedure that includes digital permissions.

### Background of the invention

It is in many connections desirable to have possibility to obtain information about, for instance, a person's geographical position, and position based services are expected to be very important for the third generation mobile telephone systems, due to, for instance, that in those systems very great demands are made upon accuracy in the position information.

Positioning equipment in combination with mobile radio systems consequently is creating a lot of new services. For some of these services which are executed in real time, permission for provision of the position information can be managed in a comparatively simple way. In other cases, where the service is not initiated by the user when it shall be utilized, some form of secure and well structured management of permissions and which include the possibility to create semipermanent position permissions.

The American patent US 6,072,396 shows a device and a method to supervise and trace people by means of a mobile telephone system, at which position information is collected in a central unit which then can present the information. Further, US 6,072,396 shows a device which includes, for instance, measuring of blood pressure and pulse, at which this information is collected and transmitted to the central unit.

The international patent application WO 00/16286 shows a system for watch and supervision of persons who need help or protection. The supervised person carries a transmitter which transmits signals over a mobile communication network. The signals contain information about position and identity and are stored in a central unit. After that, the information is accessible in the central unit to an authorized person or public authority.

The Japanese patent JP 11258325 shows a device and a procedure for supervision of a child's or animal's geographical position. The position information is transmitted via a mobile telephone system to a supervision center.

Previous systems are based on that the one who shall provide position information creates an internal database for all users. This database must be maintained, and for each user all instances and/or persons, who are authorized to request the user's current position and under which premises, have to be entered. To maintain a database of this kind is both complicated and expensive and the risk of mistakes are obvious. If information is wrongly provided, there also may be a risk of claim for damages.

The patent document WO--98/52379 relates to integrity protection in a telecommunications system. The system shown in fig. 1 includes a mobile locating node MPC connected to the GMSC P (Gateway Mobile Switching Centre). The mobile locating node MPC provides a mobile locating service, which means that the node MPC will establish the location of a mobile station MS, MS1-MS3 in response to a request from a second party A2 in this respect and inform this second party of the geographical position of the mobile station. To this end, there is found a connection between the second party A2 and the mobile locating node MPC, via which the mobile locating node MPC receives the location-finding request M1 and informs the second party A2 of the location of the mobile station MS in a response M2.

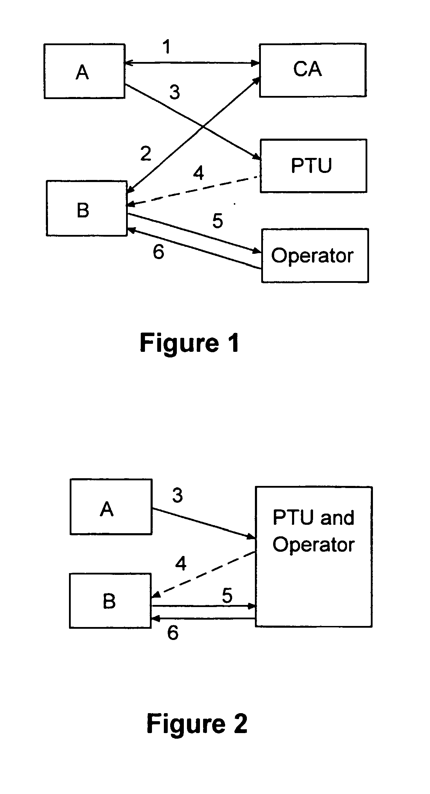

Fig. 2 is a block schematic illustrating an inventive arrangement. In addiction to those nodes also shown in fig. 1, the arrangement includes an indicator I provided in the home location register HLR. The user A1 is able to set the indicator I to indicate either one of two states, i. e. a permission granted state or a permission not-granted state.

The patent document WO-00/38467 relates to the transfer of data regarding geographic positions of mobile terminals and mobile terminal users in wireless communications systems. Techniques for ascertaining the geographic position of users and terminals in a wireless communications systems are used, for example, by operation personnel in performing system maintenance and by emergency personnel in locating lost or injured individuals. According to an exemplary method of requesting and obtaining user position information, user terminals in a wireless communications system routinely transmit position information to mobile switching centers in the system, and.the mobile switching centers maintain up-to-date terminal position information in visiting location registers. Requests for user position information are routed to a home location register which in turn routes terminal position requests to mobile switching centers with which the target users are registered. Terminal position information is retrieved from the appropriate visiting location registers and sent back to the requesting parties with a minimum of system traffic.

The above discussed patent document WO-98/52379 already provides a first solution to the problems originally identified above in confection with the maintenance of databases.

### Aim of the invention

The present invention aims at solving above problems or providing another solution than the one presented in WO-98/52379 by creating a secure and flexible PKI-based (*PKI, Public Key Infrastructure*)*,* wireless communication system to manage the provision of position information.

Another aim of the present invention is to create a possibility to separate the issuing of permission and the responsibility for positioning from that operator who is responsible for the operation of the communication system and who extracts and forwards the position information in question.

### Summary of the invention

The present invention consequently relates to a wireless communication system and a procedure for management of position information between at least one supervised object and one supervising object. Said supervised object is preferably carried by a supervised person, and said supervising object by a supervising person, at which said persons are physical or juridical persons.

The system according to the invention includes an operator and an issuer of position permission and is characterized in that the supervised object is arranged to, by means of a digital permission issued by the permission issuer, provide permission for/to the supervised object to receive information about its geographical position, at which said operator has devices to provide the current position, information for/to the supervising object.

The system according to the invention is preferably PKI-based and the supervised object and the supervising object further can be identified by means of digital identities, at which the digital identities consist of digital certificates issued by a Certificate Authority.

In one embodiment of the invention, the supervising object must have the permission of the supervised object each time it wants to derive information about the position of the supervised object, but the supervising object can also be equipped with an authorization from the supervised object, at which the supervising objects is arranged to automatically receive information about the position of the supervised object without the supervised object each time needing to provide its permission.

Further, the digital permission is arranged to consist of an attribute certificate and include information about the permission issuer, to whom the permission has been issued, that is, to which supervising person the permission has been issued, and possibly also a description of the supervised object and the supervised person.

In one more embodiment, the position, permission issuer and the operator are arranged as one unit and preferably the system according to the invention is a mobile telephone system.

### Brief description of drawings

The present invention will be described in more detail with reference to enclosed figures, in which
Figure 1 shows a schematic outline of an embodiment of the system according to the invention; and
Figure 2 shows a schematic outline of another embodiment of the system according to the invention.

### Detailed description of the invention

The present invention consequently relates to a wireless communication system for management of the provision of position information between a supervised object A and a supervising object B. At which the supervised object A and the supervising object B preferably are carried by supervised respective supervising physical or juridical persons.

One embodiment of the system according to the invention is shown in Figure 1. In this embodiment traditional PKI is utilized, where a supervised object A and a supervising object B have received digital certificates from any Certificate Authority (CA). This is illustrated in Figure 1 by the arrows 1 and 2. These steps, however, are not necessary in the cases when the objects A and B already are equipped with digital certificates or any other digital identification by means of which they can be identified. When the person who is carrying the supervised object A wants to issue permission to the person who is carrying the supervising object B to receive the position of the object A, the object A establishes contact 3 with a position permission issuer, designated by the abbreviation PTU in Figure 1. PTU has much the same function as a traditional Certificate Authority (CA). The supervised object A has to authenticate itself to the permission issuer PTU and after that, the object A can instruct the PTU to issue a digital permission to the supervising object B. The digital permission is an attribute certificate which, for instance, includes information about the permission issuer PTU, to whom the permission has been issued, that is to which supervising object B or person the permission has been issued, description of the supervised object A, and possibly also information about the person who is carrying the object A, but other information is also possible. Further, the issued digital permission is signed by/with the private key of the PTU. The issued digital permission after that either can be transmitted (according to the dashed arrow 4 in Figure 1 and 2) to the supervising object B to which it issued, or the digital permission can be made publicly accessible by means of, for instance, one or more, more or less, public catalogue services. When the supervising object B, which has received permission to derive information about the position of the supervised object A, wants to do this, object B establishes contact 5 with an operator. The operator is the one who is responsible for the operation of the communication network which is used for transmission/provision of position. Said operator preferably is a telecommunication operator in a communication network for mobile telephony. Further, it is the operator who, by means of databases and communications means, extracts and forwards the current position information and who receives the digital permission either from the supervising object B, or from the more or less public catalogue service. Said position information the operator can get in known way from, for instance, GPS (Global. Positioning System) or from information about the geographic location of base stations.

In another embodiment of the invention, which is illustrated in Figure 2, the position permission issuer PTU and the operator consist of one and the same unit. The operator's task is to authenticate the supervising object B by means of, for instance, traditional PKI-based methods or by other methods which can guarantee the authenticity of the object B. Further, the operator checks if the supervising object B has permission to receive the position of the supervised object A by checking the authenticity and validity of the digital permission by means of a origin certificate provided by the permission issuer PTU. If the digital permission is both authentic and valid, the operator transmits the position of the to supervised object A to the supervising object B.

The supervised person and the supervised object A can any time revoke the permission of the supervising object B to receive the position of the object A. These revocations of permissions can be saved in so called revocation lists, which are accessible to the operator so that he/she can check the validity of a permission. The operator can either on a regular basis derive these revocation lists, or online check can be performed.

In a system according to the invention it further can be desirable that others than the supervised object A can initiate the issuing of the position permission. This can, for instance, be the case when parents want to supervise the position of their children under age, or, for instance, when relatives want to supervise the position of their relatives suffering from senile dementia. The parents or the relatives who in this example carry the supervising object B then can ask for permission to supervise their children respective their relatives suffering from senile dementia who carry the supervised object A. Request for permission then can be made directly from, for instance, the position permission issuer PTU. Request for permission, however, must be dealt with in a very careful and secure way, because the position as such can be regarded as very delicate and insulting to integrity when ending up at wrong persons.

Further, it can in the system, according to the invention be to advantage if the person who carries the supervising object B can get an authorization directly from the supervised object A. This authorization then the supervising object B shows to the position permission issuer, PTU. On basis of the authorization the PTU can issue an authorization for the object B to receive the geographic position of the object A. The authorization in question can, for instance, be framed as a standard contract which the person who carries the object A can sign by means of his/her digital signature. This approac:h is of specific advantage when minimal initiative from the person who carries the supervised object A is wanted.

In one more embodiment of the system according to the is invention the digital permission has been extended by different additional attributes; the permission can, for instance, include information about between which points of time of a day and during which week days it is valid. Further, the permission can be provided with information regarding position accuracy, for instance if the person who is carrying the object B with its current digital permission can have position information with an accuracy of resolution of, for instance, 50 m, 1 km or 1 (Swedish) mile.

In the system according to the invention, it is further of advantage if the digital permissions include the identities of the persons who carry the objects A and B, and preferably also A's MSISDN or any other network address, such as an IP-address for GPRS/UMTS. Identities preferably are made up of the civic numbers and names of the persons, but other information which unequivocally identify the persons and the objects can of course also be used.

In the embodiment of the invention shown in Figure 1, the position permission issuer PTU and the operator are two different units_ This is of specific advantage because the operator, that is the organization which is responsible for among other things the operation of the communication network, then can sell position information, but locate issuing of permissions to/on one or more organizations. Consequently the present invention will be possible to use for most services where the service provider is separated from the operator. The invention is especially useful for services of the type person-to-person positioning. As example can be mentioned positioning/position finding of:
- members of the family;
- drivers by profession, such as mailmen, taxi drivers, policemen or truck drivers;
- pals.
Another example is position depending so called PUSH-services, that is services where a certain information shall be transmitted at a certain occasion to a certain user, and where the content shall be dependent on where the user is. This can, for instance, be the case at automatic mediation of taxi customers to vacant cars, that is, when a taxi registers itself as vacant, the driver will automatically have information about where the nearest customer is. Another example can be drivers by professsion who in a new town/city want to know where the nearest gas station, workshop or restaurant is. For instance a trucker would be able to indicate at which times he wants his meals, and the system according to the invention could be used to at these points of time indicate where the nearest restaurant is located.

In the system according to the present invention it is further possible to provide position permission issuers PTU which are directed to public authorities. These will, for instance, give policemen permission to find out the geographical position of a user suspected of crime, at which this positioning can be executed without the operator needing to be involved in each individual case.

The present invention has only been described by means of exemplifying embodiments and it should be understood that other embodiments are possible within the scope of the invention, which is only limited by the enclosed patent claims.

## Claims

1. A wireless communication system for management of position information between at least one supervised object (A) and a supervising object (B), including a position permission issuer (PTU) and an operator with devices for provision of the current position information to the supervising object (B), **characterized in that** the supervised object (A) and the supervising object (B) are arranged to be identified by digital certificates, that the position permission issuer (PTU) is arranged to issue a digital permission and arranged to sign said digital permission with a private key, wherein the supervised object (A) is arranged, with the aid of said digital permission, to provide the supervising object (B) with permission to receive information, about the geographical position of the supervised object (A).

2. System as claimed in patent claim 1, **characterized in that** the position permission issuer (PTU) and/or the operator are/is arranged to identify the supervised object (A) and the supervising object (B).

3. System as claimed in patent claim 1, **characterized in that** the position permission issuer (PTU) or the operator is arranged to identify the supervised object (A) and the supervising object (B).

4. System as claimed in any of the patent claims 1-3, **characterized in that** a Certificate Authority (CA) is arranged to issue said digital certificate.

5. System as claimed in any of the patent claims 1-4, **characterized in that** the supervising object (B) must have the permission of the supervised object (A) each time it is arranged to derive information about the position of the supervised object (A).

6. System as claimed in any of the patent claims 1-4, **characterized in that** the supervising object (B) is provided
with an authority from the supervised object (A), wherein the supervising object (B) is arranged to automatically receive information about the position of the supervised object (A), without the supervised object (A) each time being needed to provide its permission.

7. System as claimed in any of the previous patent claims, **characterized in that** the digital permissions is arranged to be made up of an attribute certificate and include information about the position permission issuer (PTU), to which supervising object (B) the permission has been issued, and also a description of the supervised object (A).

8. System as claimed in any of the previous patent claims, **characterized in that** the position permission provider (PTU) and the operator are arranged as one unit.

9. System as claimed in any of the previous patent claims, **characterized in that** said wireless communication system is a mobile telephone system.

10. Procedure for management of position information between at least one supervised object (A) and a supervising object (B), in a wireless communication system including a position permission issuer (PTU) and an operator providing the current position information to the supervising object (B), **characterized in that** the procedure comprises the steps: identifying the supervised object (A) and the supervising object (B) by means of digital certificates, with the aid of the position permission issuer (PTU) issuing a digital permission and signing said digital permission with a private key, wherein the supervised object (A) by means of said digital permission providing the supervising object (B) with permission to receive information about the geographical position of the supervised object (A).

11. Procedure as claimed in patent claim 10, **characterized in that** the identifying step is performed by means of the position permission issuer (PTU) and the operator identifying the supervised object (A) and the supervising object (B).

12. Procedure as claimed in patent claim 10, **characterized in that** the identifying step is performed by means of the position permission issuer (PTU) or the operator identifying the supervised object (A) and the supervising object (B).

13. Procedure as claimed in any of the patent claims 10-12, **characterized in** by a Certificate Authority (CA) issuing said digital certificates.

14. Procedure as claimed in any of the patent claims 10-13, **characterized in that** the supervising object (B) needs the permission of the supervised object (A) each time it wants information about the position of the supervised object (A).

15. Procedure as claimed in any of the patent claims 10-13, **characterized by** the supervising object (B) automatically receiving information about the position of the supervised object (A) without the supervised object (A) each time being needed to provide it permission, because the supervising object (B) has an authority from the supervised object (A).

16. Procedure as claimed in any of the patent claims 10-15, **characterized in that** the digital permission is provided with information about the position permission issuer (PTU), to which supervising object (B) the permission has been issued, and also a description of the supervised object (A).

17. Procedure as claimed in any of the patent claims 10-16,**characterized by** arranging the position permission provider (PTU) and the operator as one and the same unit.

18. Procedure as claimed in any of the patent claims 10-17, it **characterized by** transmitting the position information by means of a mobile telephone system.

## Patentansprüche

1. Drahtloses Kommunikationssystem für die Verwaltung von Standortinformation zwischen wenigstens einem überwachten Objekt (A) und einem überwachenden Objekt (B), das eine Einrichtung zum Ausstellen einer Standorterlaubnis (PTU) und einen Betreiber mit Einrichtungen zum Liefern der Information über den gegenwärtigen Standort an das überwachende Objekt (B) einschließt, **dadurch gekennzeichnet, dass** das überwachte Objekt (A) und das überwachende Objekt (B) dazu ausgebildet sind, durch digitale Zertifikate identifiziert zu werden, dass die Einrichtung zum Ausstellen einer Standorterlaubnis (PTU) dazu ausgebildet ist, eine digitale Erlaubnis auszustellen, und dazu ausgebildet ist, die digitale Erlaubnis mit einem privaten Schlüssel zu unterzeichnen, wobei das überwachte Objekt (A) dazu ausgebildet ist, mithilfe der digital len Erlaubnis das überwachende Objekt (B) mit der Erlaubnis zu versehen, Information über den geografischen Standpunkt des überwachten Objekts (A) zu empfanren.

2. System nach Patentanspruch 1, **dadurch gekennzeichnet, dass** die Einrichtung zum Ausstellen einer Standorterlaubnis (PTU) und/oder der Betreiber dazu ausgebildet sind/ist, das überwachte Objekt (A) und das überwachende Objekt (B) zu identifizieren.

3. System nach Patentanspruch 1, **dadurch gekennzeichnet, dass** die Einrichtung zum Ausstellen einer Standorterlaubnis (PTU) oder der Betreiber dazu ausgebildet ist, das überwachte Objekt (A) und das überwachende Objekt (B) zu identifizieren.

4. System nach einem der Patentansprüche 1 bis 3, **dadurch gekennzeichnet, dass** eine Zertifikatautorität oder -behörde (CA) dazu ausgebildet ist, das digitale Zertifikat auszustellen.

5. System nach einem der Patentansprüche 1 bis 4, **dadurch gekennzeichnet, dass** das überwachende Objekt (B) die Erlaubnis des überwachten Objekts (A) jedes Mal haben muss, wenn es dazu ausgebildet ist, Information über den Standort des überwachten Objekts (A) herzuleiten.

6. System nach einem der Patentansprüche 1 bis 4, **dadurch** gekennzeichnen, dass das überwachende Objekt (B) mit einer Vollmacht vom überwachten Objekt (A) versehen ist, wobei das überwachende Objekt (B) dazu ausgebildet ist, automatisch Information über den Standort des überwachten Objekts (A) zu empfangen, ohne dass das überwachte Objekt (A) jedes Mal seine Erlaubnis geben muss.

7. System nach einem der vorangehenden Patentansprüche, **dadurch gekennzeichnet, dass** die digitale Erlaubnis so ausgebildet ist, dass sie aus einem Attributzertifikat aufgebaut ist und Information über die Einrichtung zum Ausstellen einer Standorterlaubnis, weichem überwachenden Objekt (B) die Erlaubnis ausgestellt worden ist, und auch eine Beschreibung des überwachten Objekts (A) einschließt.

8. System nach einem der vorangehenden Patentansprüche, **dadurch gekennzeichnet, dass** die Einrichtung zum Ausstellen einer Standorterlaubnis (PTU) und der Betreiber als eine Einheit ausgebildet sind.

9. System nach einem der vorangehenden Patentansprüche, **dadurch gekennzeichnet, dass** das drahtlose Kommunikationssystem ein mobiles Telefonsystem ist.

10. Verfahren für Verwaltung von Standortinformation zwischen wenigstens einem überwachten Objekt (A) und einem überwachenden Objekt (B) in einem drahtlosen Kommunikationssystem, das eine Einrichtung zum Ausstellen einer Standorterlaubnis (PTU) und einen Betreiber aufweist, der die gegenwärtige Standortinformation zum überwachenden Objekt (B) liefert, **dadurch gekennzeichnet, dass** das Verfahren die Schritt aufweist : Identifizieren des überwachten Objekts (A) und des überwachenden Objekts (B) mithilfe von digitalen Zertifikaten mithilfe der Einrichtung zum Ausstellen einer Standorterlaubnis (PTU), die eine digitale Erlaubnis ausstellt und die digitale Erlaubnis mit einem privaten Schlüssel unterzeichnet, wobei das überwachte Objekt (A) mithilfe der digitalen Erlaubnis das überwachende Objekt (B) mit der Erlaubnis versieht, Information über den geografischen Standort des überwachten Objekts (A) zu empfangen.

11. Verfahren nach Patentanspruch 10, **dadurch gekennzeichnet, dass** der Identifizierungsschritt mithilfe der Einrichtung zum Ausstellen einer Standorterlaubnis (PTU) und des Betreibers durchgeführt wird, der das überwachte Objekt (A) und das überwachende Objekt (B) identifizieren.

12. Verfahren nach Patentanspruch 10, **dadurch gekennzeichnet, dass** der identifizierende Schritt mithilfe der Einrichtung zum Ausstellen einer Standorterlaubnis (PTU) oder des Betreiber durchgeführt wird, die/der das überwachte Objekt (A) und das überwachende Objekt (B) identifiziert.

13. Verfahren nach einem der Patentansprüche 10 bis 12, **gekennzeichnet durch** eine Zertifikatautorität oder - behörde (CA), die die digitalen Zertifikate ausstellt.

14. Verfahren nach einem der Patentansprüche 10 bis 13, **dadurch gekennzeichnet, dass** das überwachende Objekt (B) die Erlaubnie des überwachten Objekts (A) jedes Mal benötigt, wenn es Information über den Standort des überwachten Objekts (A) haben will.

15. Verfahren nach einem der Patentansprüche 10 bis 13, **dadurch gekennzeichnet, dass** das überwachende Objekt (B) automatisch Information über den Standort des überwachten Objekts (A) erhält, ohne dass das überwachte Objekt (A) jedes Mal ihm Erlaubnis geben muss, da das überwachende Objekt (B) eine Vollmacht von dem überwachten Objekt (A) hat.

16. Verfahren nach einem der Patentansprüche 10 bis 15, **dadurch gekennzeichnet, dass** die digitale Erlaubnis mit Information über die Einrichtung zum Ausstellen einer Standorterlaubnis (PTU), zu welchem überwachenden Objekt (B) die Erlaubnis ausgestellt worden ist, und auch mit einer Beschreibung des überwachten Objekts (A) versehen wird.

17. Verfahren nach einem der Patentansprüche 10 bis 16, **dadurch gekennzeichnet, dass** die Einrichtung zum Ausstellen einer Standorterlaubnis (PTU) und der Betreiber als eine und dieselbe Einheit ausgebildet werden.

18. Verfahren nach einem der Patentansprüche 10 bis 17, **dadurch gekennzeichnet, dass** die Standortinformation mithilfe eines mobilen Telefonsystems übertragen wird.

## Revendications

1. Système de communication sans fil pour gestion d'information de position entre au moins un objet supervisé (A) et un objet superviseur (8), incluant un émetteur de permission de position (PTU) et un opérateur avec des dispositifs pour fourniture de l'information de position courante à l'objet superviseur (B), **caractérisé en ce que** l'objet supervisé (A) et l'objet superviseur (B) sont prévus pour être identifiés par des certificats numériques, et **en ce que** l'émetteur de permission de position (PTU) est prévu pour émettre une permission numérique et prévu pour signer la dite permission numérique avec une clé privée, dans lequel l'objet supervisé (A) est agencé, à l'aide de la dite permission numérique, pour fournir à l'objet superviseur (B) une permission de recevoir une information relative à la position géographique de l'objet supervisé (A).

2. Système selon la revendication 1, **caractérisé en ce que** l'émetteur de permission de position (PTU) et/ou l'opérateur sont prévus pour identifier l'objet supervisé (A) et l'objet superviseur (B).

3. Système selon la revendication 1, **caractérisé en ce que** l'émetteur de permission de position (PTU) ou l'opérateur est prévu pour identifier l'objet supervisé (A) et l'objet superviseur (B).

4. Système selon une quelconque des revendications 1 à 3, **caractérisé en ce qu'**une Autorité de Certification (CA) est prévue pour émettre le dit certificat numérique.

5. Système selon une quelconque des revendications 1 à 4, **caractérisé en ce que** l'objet superviseur (B) doit avoir la permission de l'objet supervisé (A) chaque fois qu'il est disposé pour établir une information relative à la position de l'objet supervisé (A),

6. Système selon une quelconque des revendications 1 à 4, **caractérisé en ce que** l'objet superviseur (B) reçoit une autorité provenant de l'objet supervisé (A), dans lequel l'objet superviseur (B) est agencé pour recevoir automatiquement une information relative à la position de l'objet supervisé (A) sans que l'objet supervisé (A) ait besoin à chaque fois de donner sa permission.

7. Système selon une quelconque des revendications précédentes, **caractérisé en ce que** la permission numérique est agencée de manière à être constituée d'un certificat d'attribut et à inclure une information relative à l'émetteur de permission de position (PTU), à quel objet superviseur (B) la permission a été fournie, et également une description de l'objet supervisé (A).

8. Système selon une quelconque des revendications précédentes, **caractérisé en ce que** le fournisseur de permission de position (PTU) et l'opérateur sont agencés comme une seule unité.

9. Système selon une quelconque des revendications précédentes, **caractérisé en ce que** le dit système de communication sans fil est un système de téléphonie mobile.

10. Procédé de gestion d'information de position entre au moins un objet supervisé (A) et un objet superviseur (B), dans un système de communication sans fil incluant un émetteur de permission de position (PTU) et un opérateur fournissant l'information de position courante à l'objet superviseur (B), **caractérisé en ce que** le procédé comprend les étapes d'identification de l'objet supervisé (A) et de l'objet superviseur (B) au moyen de certificats numériques, à l'aide de l'émetteur de permission de position (PTU) émettant une permission numérique et signant la dite permission numérique avec une clé privée, dans lequel l'objet supervisé (A), au moyen de la dite permission numérique, fournit à l'objet superviseur (B) la permission de recevoir une information relative à la position géographique de l'objet supervisé (A).

11. Procédé selon la revendication 10, **caractérisé en ce que** l'étape d'identification est effectuée au moyen de l'émetteur de permission de position (PTU) et de l'opérateur identifiant l'objet supervisé (A) et l'objet superviseur (B).

12. Procédé selon la revendication 10, **caractérisé en ce que** l'étape d'identification est effectué au moyen de l'émetteur de permission de position (PTU) ou de l'opérateur identifiant l'objet supervisé (A) et l'objet superviseur (B).

13. Procédé selon une quelconque des revendications 10 à 12, **caractérisé en ce qu'**une Autorité de Certification (CA) émet les dits certificats numériques.

14. Procédé selon une quelconque des revendications 10 à 13, **caractérisé en ce que** l'objet superviseur (B) a besoin de la permission de l'objet supervisé (A) chaque fois qu'il désire une information relative à la position de l'objet supervisé (A).

15. Procédé selon une quelconque des revendications 10 à 13, **caractérisé en ce que** l'objet superviseur (B) reçoit automatiquement une information relative à la position de l'objet supervisé (A) sans que l'objet supervisé (A) ait besoin chaque fois de fournir sa permission, puisque l'objet superviseur (B) possède une autorité de la part de l'objet supervisé (A).

16. Procédé selon une quelconque des revendications 10 à 15, **caractérisé en ce que** la permission numérique comporte une information relative à l'émetteur de permission de position (PTU), à l'objet superviseur (B) auquel la permission a été donnée, et également une description de l'objet supervisé (A).

17. Procédé selon une quelconque des revendications 10 à 16, **caractérisé en ce que** le fournisseur de permission de position (PTU) et l'opérateur sont agencés comme une seule et même unité.

18. Procédé selon une quelconque des revendications 10 à 17, **caractérisé en ce que** l'information de position est transmise au moyen d'un système de téléphonie mobile.
